# FASCICULE DE BREVET EUROPEEN

(11) **EP 1 321 360 B1**
(45) Date de publication et mention de la délivrance du brevet: **12.04.2006**
(21) Numéro de dépôt: 02293106.7
(22) Date de dépôt: 16.12.2002
(51) Int. Cl.: B64C 25/04, F16C 23/10, F16C 23/02, B64F 5/00

(54) **Procédé et dispositif de montage d'un train d'atterrisage sur une structure d'aéronef et aéronef comportant un tel train**
Verfahren und Vorrichtung zum Einbau eines Fahrwerkes auf der Struktur eines Luftfahrzeuges und mit einem solchen Fahrwerk ausgestattetes Luftfahrzeug
Method and device for mounting a landing gear on an aircraft structure and aircraft comprising such a landing gear

(30) Priorité: 18.12.2001 FR 0116365
(43) Date de publication de la demande: 25.06.2003
(73) Titulaire: AIRBUS France, 31060 Toulouse Cedex 03 (FR)
(72) Inventeur: Reniau, Grégory, 31170 Tournefeuille (FR)
(74) Mandataire: Poulin, Gérard

(56) Documents cités:
- EP-A- 1 050 456
- DE-A- 1 525 178
- DE-A- 3 729 102
- US-A- 6 042 270
- US-A- 6 129 310
- PATENT ABSTRACTS OF JAPAN vol. 005, no. 174 (M-096), 10 novembre 1981 (1981-11-10) -& JP 56 101418 A (MIYAZAKI SADAO), 14 août 1981 (1981-08-14)

## Description

### Domaine technique

L'invention concerne un procédé de montage d'un train d'atterrissage sur une structure d'un aéronef. De façon plus précise, l'invention concerne un procédé de montage permettant de positionner le train d'atterrissage avec la précision requise, quelles que soient les tolérances de fabrication de ladite structure, et notamment lorsque les tolérances sont supérieures à cette précision.

L'invention concerne en outre un aéronef comportant un train d'atterrissage dont le montage est effectué par ce procédé.

Le procédé selon l'invention peut être utilisé sur tous les aéronefs. Toutefois, il est particulièrement adapté aux avions gros et très gros porteurs, dans lesquels le train d'atterrissage et la structure qui le reçoit sont de grandes dimensions.

### Etat de la technique antérieure

Un train d'atterrissage tel que celui representé dans la demande de brevet européen EP 1050456 A est généralement monté sur la structure d'un aéronef par l'intermédiaire de plusieurs arbres parallèles entre eux et dont les extrémités sont supportées par des paliers à rotule insérés dans des alésages pratiqués dans ladite structure.

Les tolérances de fabrication de la structure de l'aéronef sont liées notamment aux tolérances d'usinage et de positionnement des pièces, ainsi qu'aux variations de température et aux déformations de la structure lors de son assemblage.

Généralement, ces tolérances de fabrication sont compatibles avec la précision de positionnement requise du train d'atterrissage par rapport à ladite structure.

Cependant, il peut arriver que les tolérances de fabrication soient supérieures à la précision requise pour le positionnement du train d'atterrissage relativement à la structure. Cette situation se présente notamment lorsque les dimensions du train d'atterrissage et de la structure qui le reçoit sont importantes. Tel est, par exemple, le cas sur un avion gros ou très gros porteur.

Afin de résoudre ce problème, il est possible d'usiner dans la structure des alésages de diamètre inférieur au diamètre requis pour la mise en place des paliers à rotule, en laissant subsister une collerette d'épaisseur supérieure aux tolérances de fabrication, à la périphérie de chacun des alésages. Les alésages correspondant aux extrémités des différents arbres assurant le montage du train d'atterrissage sont ensuite usinés sur la chaîne d'assemblage par une machine appropriée.

La machine utilisée à cet effet comprend alors un élément de base ayant une rigidité appropriée et des moyens d'usinage fixés sur cet élément. Les positions des moyens d'usinage sont définies de façon à pouvoir usiner les différents alésages à leurs positions théoriques, avec des tolérances inférieures à la précision requise. L'usinage ainsi réalisé concerne d'une part la position des alésages dans le plan X, Z de la structure et, d'autre part, un surfaçage des collerettes de façon à obtenir la position souhaitée des paliers à rotule selon un axe Y perpendiculaire audit plan et confondu avec l'axe de l'arbre correspondant.

Toutefois, cette solution présente plusieurs inconvénients.

Certains de ces inconvénients sont liés à la machine. Ainsi, son coût est élevé et elle est encombrante. Elle nécessite donc une surface de stockage importante en dehors des périodes de production pendant lesquelles elle est utilisée. De plus, il s'agit d'une machine complexe dont la maintenance peut s'avérer chère et délicate. En outre, l'utilisation d'une telle machine requiert un temps supplémentaire lors de l'assemblage du train d'atterrissage. Ce temps peut représenter jusqu'à une dizaine de jours dans le cas d'un train d'atterrissage d'un avion gros porteur, ce qui est très pénalisant.

D'autres inconvénients concernent par exemple la difficulté de réaliser sur la chaîne d'assemblage un traitement de surface des parties usinées, le risque de déformation de la structure après l'enlèvement de la machine, en raison notamment des contraintes induites dans le matériau lors de l'usinage, etc..

Par ailleurs, le document JP-B-56052622 décrit un dispositif permettant de régler la position du point d'intersection de l'axe Y d'un arbre dans le plan X, Z de la structure support. Toutefois, ce dispositif ne permet pas à l'arbre d'être supporté par un palier à rotule. Il n'est donc pas adapté à la fixation d'un train d'atterrissage, notamment dans le cas où les deux parties de la structure qui reçoivent les extrémités opposées des arbres du train d'atterrissage ne sont pas parallèles en raison des tolérances de fabrication de ladite structure. De plus, un train d'atterrissage d'aéronef est le plus souvent monté au moyen de paliers à rotule, en raison des déformations possibles de la structure notamment lors des périodes de roulage de l'avion.

Le document DE-A-1 525 178 décrit un dispositif permettant de régler la position d'un arbre supporté par des paliers à rotule dans une transmission.

### Exposé de l'invention

L'invention a précisément pour but de supprimer au moins en partie les inconvénients de l'art antérieur.

De façon plus précise, l'invention concerne un procédé de montage d'un train d'atterrissage d'aéronef, dont la conception originale permet de positionner ledit train avec la précision requise même lorsque les tolérances de fabrication de la structure sur laquelle il est monté sont supérieures à cette précision..

Conformément à l'invention, cet objectif est atteint au moyen d'un procédé de montage d'au moins un arbre d'un train d'atterrissage sur une structure d'aéronef, par l'intermédiaire de deux paliers à rotule liés à ladite structure, caractérisé en ce qu'il comprend les étapes suivantes :
- mesure des écarts entre les positions théoriques et les positions réelles des centres des paliers à rotule ;
- actionnement de moyens de réglage associés à l'un au moins desdits paliers à rotule, pour ramener les centres des paliers à rotule dans leurs positions théoriques ;
- blocage desdits moyens de réglage ; et
- montage de l'arbre dans les paliers à rotule.

La mise en oeuvre de ce procédé permet de régler la position du point de pivotement des paliers à rotule selon trois directions orthogonales. Le train d'atterrissage peut ainsi être positionné avec précision, quelles que soient les tolérances de fabrication de là structure qui le supporte.

De préférence, l'actionnement des moyens de réglage comprend l'actionnement de moyens de réglage axial, aptes à déplacer les centres des paliers à rotule parallèlement à l'axe de l'arbre et l'actionnement de moyens de réglage radial, aptes à déplacer les centres des paliers à rotule dans un plan perpendiculaire à l'axe de l'arbre.

Avantageusement, l'actionnement des moyens de réglage axial consiste alors en la mise en place d'au moins une cale d'épaisseur entre des collerettes formées sur une bague liée à la structure et sur une cage du palier à rotule.

Avantageusement encore, l'actionnement des moyens de réglage radial consiste en une première rotation d'une cage externe du palier à rotule dans un premier alésage formé dans une bague solidaire de la structure, et en une deuxième rotation d'une cage interne du palier à rotule dans un deuxième alésage formé dans ladite cage externe du palier à rotule, en un emplacement excentré par rapport à un axe du premier alésage, ladite cage interne comportant une surface intérieure sphérique excentrée par rapport à l'axe du deuxième alésage et dans laquelle est reçue la noix du palier à rotule. La première rotation provoque un déplacement du deuxième alésage, formé dans la cage externe du palier à rotule, autour de l'axe du premier alésage, formé dans la bague. La deuxième rotation provoque un déplacement de la surface intérieure sphérique formée dans la cage interne du palier à rotule, autour de l'axe du deuxième alésage, formé dans la cage externe du palier à rotule.

Dans ce cas, on utilise de préférence un palier à rotule dans lequel le deuxième alésage et la surface intérieure sphérique sont excentrés d'une même distance e, respectivement par rapport à l'axe du premier alésage et par rapport à l'axe du deuxième alésage.

Selon un perfectionnement avantageux de l'invention, les moyens de réglage radial sont actionnés sans démonter le palier à rotule.

Avantageusement encore, l'étape d'actionnement des moyens de réglage est précédée d'une étape de mise en place de moyens de repérage sur la structure ou sur une bague solidaire de celle-ci et dans laquelle est monté le palier à rotule.

L'invention concerne aussi un aéronef dont le train d'atterrissage est monté selon un tel procédé.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue en perspective qui représente schématiquement un train d'atterrissage d'aéronef dont le montage peut être réalisé par le procédé de l'invention ;
- la figure 2 illustre schématiquement, de façon volontairement accentuée, le décalage pouvant exister entre l'emplacement théorique (représenté en trait plein) des paliers à rotule assurant le montage d'un train d'atterrissage d'aéronef et leur emplacement réel (représenté en trait interrompu), compte tenu des tolérances de fabrication de la structure de l'aéronef ;
- la figure 3 est une vue de côté, en coupe selon un plan passant par son axe, d'un palier à rotule réglable conforme à l'invention ;
- la figure 4 est une vue en bout qui illustre schématiquement, dans un plan perpendiculaire à l'axe du palier à rotule, le réglage radial du palier représenté sur la figure 3 ; et
- la figure 5 est une vue en coupe selon la ligne V-V de la figure 3.

### Description détaillée d'un mode de réalisation préféré de l'invention

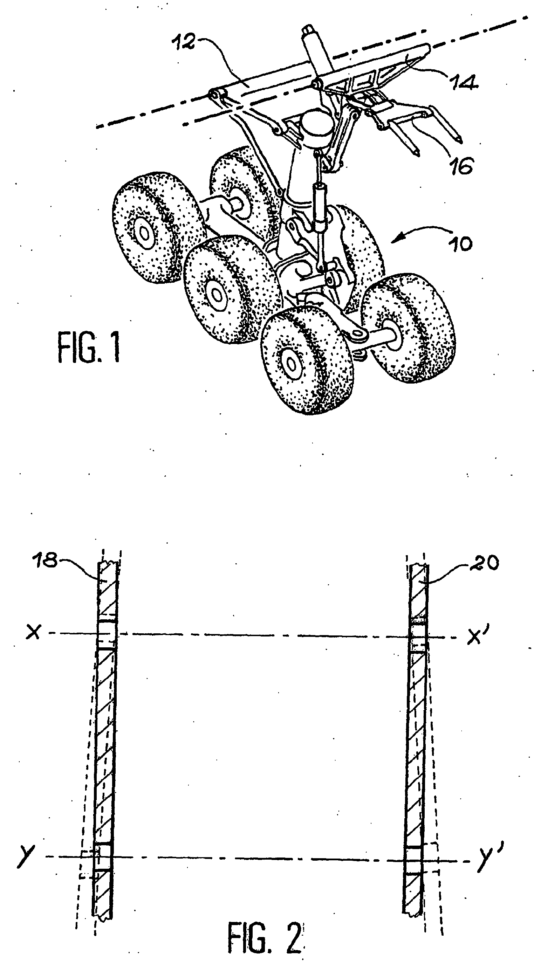

Comme l'illustre schématiquement la figure 1, un train d'atterrissage 10 d'aéronef est habituellement monté sur la structure de celui-ci par des arbres parallèles, par l'intermédiaire de paliers à rotule interposés entre les extrémités des arbres et les parties adjacentes de la structure.

Dans le mode de réalisation représenté à titre d'exemple sur la figure 1, le train d'atterrissage 10 comprend un arbre principal d'articulation 12 un arbre de contrefiche primaire 14 et un arbre de contrefiche secondaire 16. De façon générale, le montage du train sur la structure s'effectue habituellement par au moins deux arbres.

La figure 2 illustre très schématiquement et de façon volontairement exagérée le cas le plus simple où le train d'atterrissage est monté entre deux parois 18 et 20 de la structure par deux arbres dont seuls les axes XX' et YY' sont représentés. Plus précisément, les traits pleins représentent les emplacements théoriques des parois 18 et 20 et les traits interrompus représentent des emplacements réels possibles de ces parois, compte tenu des tolérances de fabrication de la structure de l'aéronef.

Conformément à l'invention, on mesure tout d'abord, sur les parois 18 et 20 de la structure, les écarts entre la position théorique et la position réelle du centre de chacun des paliers à rotule. Plus précisément, du fait que les paliers à rotule ne sont pas encore montés à ce stade du procédé le centre de chacun des paliers est représenté par le point d'intersection entre l'axe géométrique de l'arbre et le plan médian de la paroi. Ce point d'intersection est appelé "point d'interface".

Dans la pratique, les écarts entre les points d'interface théoriques et les points d'interface réels sont mesurés par tout moyen connu approprié, notamment par visée laser.

Lorsque ces écarts ont été mesurés, on en déduit les réglages qui doivent être effectués sur des paliers à rotule réglables utilisés, conformément à l'invention, pour monter chacun des arbres tels que 12, 14 et 16 sur les parois 18 et 20 de la structure de l'aéronef.

De façon plus précise, selon les tolérances liées à l'usinage de la structure et selon la précision de positionnement requise, chacun des arbres peut être supporté soit par deux paliers à rotule réglables, soit par un palier à rotule classique à une extrémité et un palier à rotule réglable à l'autre extrémité.

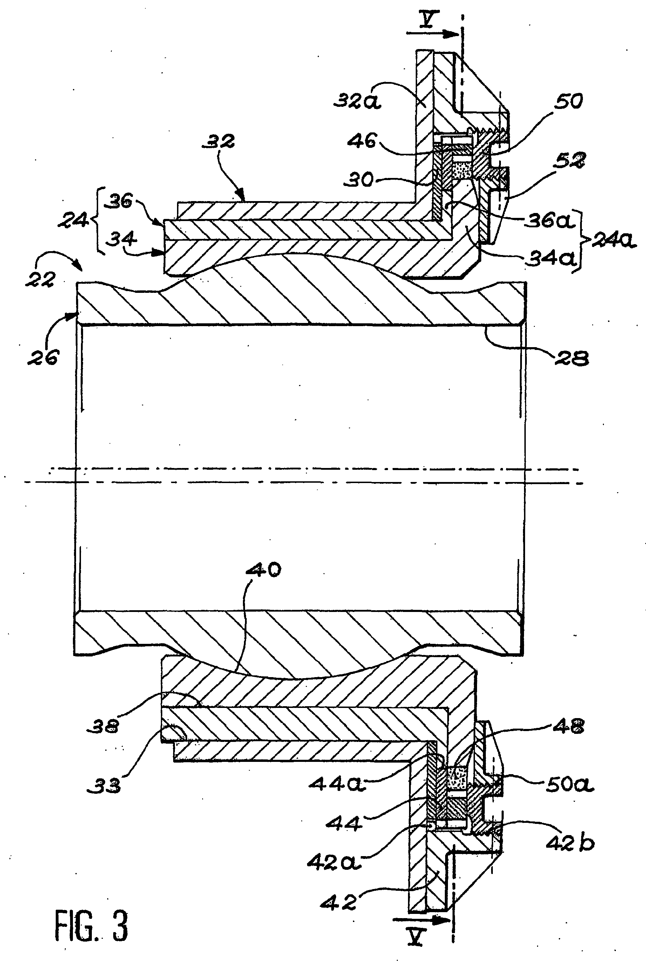

Afin de comprendre la nature des réglages qui peuvent être effectués sur les paliers à rotule réglables, lorsque de tels paliers sont utilisés, un tel palier va à présent être décrit à titre d'exemple, en se référant aux figures 3 à 5.

De façon classique, le palier 22 à rotule réglable utilisé conformément à l'invention comprend une cage de rotule 24 et une noix de rotule 26, montée dans la cage 24 de façon à pouvoir effectuer un mouvement rotulant autour du centre de la rotule. La cage 24 est prévue pour être fixée dans l'une ou l'autre des parois 18 et 20, alors que la noix 26 est traversée par un alésage 28 dans lequel est reçu l'arbre correspondant.

Le palier 22 à rotule réglable comprend des moyens de réglage axial et des moyens de réglage radial.

Les moyens de réglage axial sont conçus pour déplacer le centre de la rotule selon une direction parallèle à l'axe de l'arbre qu'elle supporte.

Dans la pratique, ces moyens de réglage axial peuvent notamment comprendre une ou plusieurs cales d'épaisseur 30, interposées entre deux collerettes 24a et 32a formées respectivement sur la cage de rotule 24 et sur une bague 32 prévue pour être fixée dans la paroi correspondante de la structure. En variante, la ou les cales d'épaisseur 30 peuvent aussi être interposées directement entre la collerette 24a et la paroi correspondante de la structure de l'aéronef.

Les moyens de réglage radial sont conçus pour déplacer le centre de la rotule dans un plan perpendiculaire à l'axe de l'arbre qu'elle supporte.

Dans le mode de réalisation illustré sur les figures 3 à 5, les moyens de réglage radial comprennent une cage de rotule 24 réalisée en deux parties 34 et 36. Les parties 34 et 36 constituent respectivement une cage interne et une cage externe de la cage de rotule 24.

La cage externe 36 est montée dans un premier alésage cylindrique 33 formé à l'intérieur de la bague 32 ou directement à l'intérieur de la paroi de la structure. A cet effet, la cage externe 36 présente une surface extérieure cylindrique. La cage externe 36 est traversée par un deuxième alésage cylindrique 38 dont l'axe A2 est parallèle à l'axe A1 de l'alésage cylindrique 33 et de la surface extérieure cylindrique de la cage externe. De plus, l'axe A2 est excentré d'une distance e1 donnée par rapport à l'axe A1.

La cage interne 34 est montée à l'intérieur de la cage externe 36. A cet effet, elle comporte une surface extérieure cylindrique, d'axe A2 et de diamètre uniforme sensiblement égal au diamètre de l'alésage cylindrique 38, en respectant les jeux et tolérances connus de l'homme du métier. La cage interne 34 comporte également une surface intérieure sphérique 40 dans laquelle la noix de rotule 26 est reçue en respectant les jeux et tolérances connus de l'homme du métier. La surface intérieure sphérique 40 de la cage interne 34 est excentrée de façon telle qu'un axe A3 parallèle à l'axe A2 et passant par le centre de ladite surface intérieure sphérique 40 soit excentré d'une distance e2 par rapport à cet axe A2.

Dans la pratique, notamment dans le cas de rotules de grandes dimensions, la cage interne 34 est souvent composée de deux demi cages qui sont liées par leur plan de joint après insertion de la noix. Ce plan de joint peut être indifféremment un plan passant par l'axe A2 ou un plan orthogonal à cet axe A2.

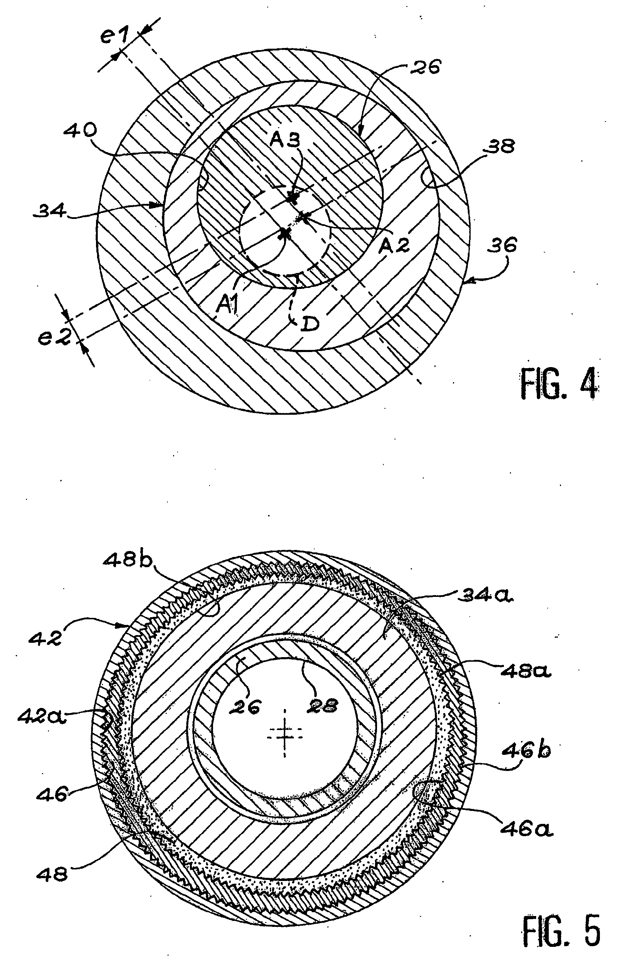

Comme l'illustre schématiquement la figure 4, cet agencement permet de déplacer l'axe A3 de la noix de rotule 26 dans un plan perpendiculaire à cet axe, par des rotations combinées de la cage externe 32 autour de son axe A1 et de la cage interne 34 autour de son axe A2.

Selon un mode de réalisation préféré de l'invention, tel qu'illustré sur la figure 4, les distances e1 et e2 sont égales à une même valeur e. Dans ce cas, les rotations combinées de la cage externe 36 et de la cage interne 34 permettent de positionner l'axe A3, et par conséquent le point d'interface de l'arbre considéré, en un point quelconque d'un disque D de diamètre 4e centré sur l'axe A1 de la cage externe 36.

Pour chacun des paliers à rotule 22, on détermine l'épaisseur de la cale 30 ainsi que les positions angulaires de la cage externe 36 et de la cage interne 34 en fonction des écarts mesurés entre les positions théoriques et réelles des points d'interface. Les valeurs de cette épaisseur et de ces positions angulaires peuvent être soit calculées, soit extrapolées à partir d'un tableau de correspondance fourni avec les paliers à rotule.

Pour chacun des paliers à rotule 22, on met ensuite en place des moyens de repérage ou de détrompage sur la paroi 18 ou 20 de la structure ou sur la bague 32 lorsque celle-ci existe.

Dans le mode de réalisation illustré à titre d'exemple sur les figures 3 et 5, les moyens de repérage comprennent une couronne extérieure dentée 42, prévue pour être fixée sur la paroi 18 ou 20 de la structure de l'aéronef, en chaîne de production. La couronne extérieure 42 est pourvue d'une denture interne 42a.

Les moyens de repérage comprennent également une première couronne dentée intermédiaire 44 munie d'une denture externe apte à venir en prise avec la denture interne 42a de la couronne extérieure 42. La première couronne dentée intermédiaire 44 présente un alésage excentrique 44a dans lequel vient s'encastrer la collerette 36a de la cage externe 36, lorsque ladite cage occupe la position angulaire imposée par le réglage radial.

Les moyens de repérage comprennent de plus une deuxième couronne dentée intermédiaire 46 munie d'une denture interne 46a et d'une denture externe 46b également apte à venir en prise avec la denture interne 42a de la couronne extérieure 42.

Une couronne dentée intérieure 48 est également équipée d'une denture externe 48a apte à venir en prise avec la denture interne 46a de la deuxième couronne intermédiaire 46. La couronne dentée intérieure 48 présente un alésage excentrique 48b dans lequel vient s'encastrer la collerette 34a de la cage interne 34, lorsque ladite cage occupe la position angulaire imposée par le réglage radial.

Enfin, les moyens de repérage comprennent également un écrou annulaire extérieur 50, prévu pour être vissé dans une partie terminale taraudée 42b de la couronne extérieure 42, et un écrou annulaire intérieur 52, prévu pour être vissé dans un trou taraudé 50a de l'écrou annulaire extérieur 50.

L'écrou extérieur 50 permet de serrer contre la collerette 32a de la bague 32 l'empilement formé par la cale 30, la première couronne intermédiaire 44 et l'ensemble formé par la deuxième couronne intermédiaire 46 et la couronne intérieure 48.

L'écrou intérieur 52 permet de serrer contre la collerette 32a de la bague 32 l'empilement formé par la cale 30, la collerette 36a de la cage externe 36 et la collerette 34a de la cage interne 34.

Dans la pratique, les couronnes dentées 44, 46 et 48 agissent à la fois comme détrompeurs et comme arrêts en rotation des cages externe 36 et interne 34. Lorsque ces éléments sont convenablement installés, ils sont fixés sur la couronne extérieure 42 à l'aide de l'écrou extérieur 50. Ces éléments ne seront plus démontés par la suite, même lorsque le palier à rotule 22 devra être remplacé dans le cadre des opérations de maintenance.

Lors d'un remplacement du palier à rotule 22, l'opérateur positionne le nouveau palier en faisant tourner successivement chacune des cages 34 et 36 en fonction de la position des couronnes dentées 44, 46 et 48 qui a été fixée préalablement lors de leur installation en chaîne de production. Lorsque les bonnes positions sont trouvées, le palier à rotule entre dans son logement. Il est bloqué dans cette position par la mise en place de l'écrou intérieur 52.

Il est à noter que les moyens de repérage qui viennent d'être décrits peuvent être remplacés par un simple marquage. L'opérateur positionne alors les cages 34 et 36 en les faisant tourner jusqu'à ce que des marquages prévus sur celles-ci correspondent avec des marquages réalisés sur la structure de l'aéronef, en chaîne de production.

L'opération qui vient d'être décrite en détail pour l'un des paliers à rotule est répétée pour tous les paliers à rotule réglable associés aux différents arbres supportant le train d'atterrissage.

Le procédé de montage se termine par le montage du ou des arbres 12, 14 et 16 dans les paliers à rotule installés de la manière décrite.

Le procédé selon l'invention permet ainsi d'obtenir la précision de positionnement souhaitée du train d'atterrissage même lorsque les tolérances de fabrication de la structure qui supporte le train sont telles que les écarts entre les positions théoriques et réelles des alésages de la ferrure recevant les paliers à rotule sont supérieures à la précision souhaitée.

## Revendications

1. Procédé de montage d'au moins un arbre (12, 14, 16) d'un train d'atterrissage (10) sur une structure (18, 20) d'aéronef, par l'intermédiaire de deux paliers à rotule (22) liés à ladite structure, **caractérisé en ce qu'**il comprend les étapes suivantes :
- mesure des écarts entre les positions théoriques et les positions réelles des centres des paliers à rotule (22) ;
- actionnement de moyens de réglage (30, 34, 36) associés à l'un au moins desdits paliers à rotule (22), pour ramener les centres des paliers à rotule dans leurs positions théoriques ;
- blocage desdits moyens de réglage ; et
- montage de l'arbre (12, 14, 16) dans les paliers à rotule (22).

2. Procédé de montage selon la revendication 1, dans lequel l'actionnement des moyens de réglage comprend l'actionnement de moyens de réglage axial (30), aptes à déplacer les centres des paliers à rotule (22) parallèlement à l'axe de l'arbre (12, 14, 16) et l'actionnement de moyens de réglage radial (34, 36), aptes à déplacer les centres des paliers à rotule (22) dans un plan perpendiculaire à l'axe de l'arbre(12, 14, 16).

3. Procédé de montage selon la revendication 2, dans lequel l'actionnement des moyens de réglage axial consiste en la mise en place d'au moins une cale d'épaisseur (30) entre des collerettes (32a, 24a) formées sur une bague (32) liée à la structure et sur une cage (24) du palier à rotule (22).

4. Procédé de montage selon l'une quelconque des revendications 2 et 3, dans lequel l'actionnement des moyens de réglage radial consiste en une première rotation d'une cage externe (36) du palier à rotule (22) dans un premier alésage (33) formé dans une bague (32) solidaire de la structure, et en une deuxième rotation d'une cage interne (34) du palier à rotule (22) dans un deuxième alésage (38) formé dans ladite cage externe (36) du palier à rotule (22), en un emplacement excentré par rapport à un axe (A1) du premier alésage (33), ladite cage interne (34) comportant une surface intérieure sphérique (40) excentrée par rapport à l'axe (A2) du deuxième alésage (38) et dans laquelle est reçue la noix (26) du palier à rotule (22).

5. Procédé de montage selon la revendication 4, dans lequel on utilise un palier à rotule (22) dans lequel le deuxième alésage (38) et la surface intérieure sphérique (40) sont excentrés d'une même distance e, respectivement par rapport à l'axe (A1) du premier alésage (33) et par rapport à l'axe (A2) du deuxième alésage (38).

6. Procédé de montage selon l'une quelconque des revendications 2 à 5, dans lequel les moyens de réglage radial (34, 36) sont actionnés sans démonter ledit palier à rotule (22).

7. Procédé de montage selon l'une quelconque des revendications précédentes, dans lequel l'étape d'actionnement des moyens de réglage (30, 34, 36) est précédée d'une étape de mise en place de moyens de repérage (44, 46, 48) sur la structure ou sur une bague solidaire de celle-ci et dans laquelle est monté le palier à rotule (22).

8. Aéronef comportant un train d'atterrissage (10) monté selon le procédé des revendications précédentes.

## Patentansprüche

1. Verfahren zur Montage mindestens einer Welle (12,14,16) eines Fahrwerks (10) an einer Struktur (18,20) eines Luftfahrzeugs mittels zweier mit der Struktur verbundener Kugelgelenklager (22), **dadurch gekennzeichnet, dass** es die folgenden Schritte umfasst:
- Messen der Abstände zwischen den theoretischen Positionen und den tatsächlichen Positionen der Zentren der Kugelgelenklager (22),
- Betätigen der Regelungsmittel (30,34,36), die mindestens einem der Kugelgelenklager (22) zugeordnet sind, um die Zentren der Kugelgelenklager in ihre theoretischen Positionen zurückzuführen,
- Blockieren der Regelungsmittel, und
- Montieren der Welle (12,14,16) in den Kugelgelenklagern (22).

2. Montageverfahren nach Anspruch 1, wobei die Betätigung der Regelungsmittel die Betätigung der axialen Regelungsmittel (30), welche die Zentren der Kugelgelenklager (22) parallel zur Achse der Welle (12,14,16) verschieben können, sowie die Betätigung der radialen Regelungsmittel (34,36), welche die Zentren der Kugelgelenklager (22) in einer zur Achse der Welle (12,14,16) senkrechten Ebene verschieben können, umfasst.

3. Montageverfahren nach Anspruch 2, wobei die Betätigung der axialen Regelungsmittel in der Anordnung mindestens eines dicken Ausrichtkeils (30) zwischen den auf einem mit der Struktur verbundenen Ring (32) und auf einem Käfig (24) des Kugelgelenklagers (22) ausgebildeten Flanschen (32a,24a) besteht.

4. Montageverfahren nach einem der Ansprüche 2 oder 3, wobei die Betätigung der radialen Regelungsmittel in einer ersten Drehung eines äußeren Käfigs (36) des Kugelgelenklagers (22) in einer ersten, in einem mit der Struktur einstückigen Ring (32) ausgebildeten Bohrung (33) und in einer zweiten Drehung eines inneren Käfigs (34) des Kugelgelenklagers (22) in einer zweiten, in dem äußeren Käfig (36) des Kugelgelenklagers (22) ausgebildeten Bohrung (38) besteht, und zwar an einer in bezug auf eine Achse (A1) der ersten Bohrung (33) exzentrisch angeordneten Stelle, wobei der innere Käfig (34) eine sphärische Innenfläche (40) aufweist, die in bezug auf die Achse (A2) der zweiten Bohrung (38) exzentrisch angeordnet ist und in die der Kopf (26) des Kugelgelenklagers (22) aufgenommen ist.

5. Montageverfahren nach Anspruch 4, wobei ein Kugelgelenklager (22) verwendet wird, bei dem die zweite Bohrung (38) und die sphärische Innenfläche (40) jeweils um eine gleiche Strecke e in bezug auf die Achse (A1) der ersten Bohrung (33) und in bezug auf die Achse (A2) der zweiten Bohrung (38) versetzt sind.

6. Montageverfahren nach einem der Ansprüche 2 bis 5, wobei die radialen Regelungsmittel (34,36) betätigt werden, ohne das Kugelgelenklager (22) zu demontieren.

7. Montageverfahren nach einem der vorangehenden Ansprüche, wobei dem Schritt der Betätigung der Regelungsmittel (30,34,36) ein Schritt der Anbringung von Markierungs- bzw. Bezugspunktmitteln (44,46,48) an der Struktur oder an einem mit dieser einstückigen Ring, in der/dem das Kugelgelenklager (22) angebracht ist, vorangeht.

8. Luftfahrzeug mit einem Fahrwerk (10), das gemäß dem Verfahren der vorangehenden Ansprüche montiert ist.

## Claims

1. Process for assembly of at least one hinge shaft (12, 14, 16) of a landing gear (10) on an aircraft structure (18, 20), through two ball joints (22) connected to the said structure, **characterized in that** it comprises the following steps:
- measurement of the differences between the theoretical positions and the real positions of the centers of the ball joints (22);
- actuation of adjustment means (30, 34, 36) associated with at least one of the said ball joints (22), to bring the centers of the ball joints into their theoretical positions;
- blockage of the said adjustment means; and
- installation of the hinge shaft (12, 14, 16) in the ball joints (22).

2. Installation process according to claim 1, in which the actuation of the adjustment means includes actuation of axial adjustment means (30) capable of displacing the centers of the ball joints (22) parallel to the axis of the hinge shaft (12, 14, 16) and actuation of radial adjustment means (34, 36) capable of displacing the centers of the ball joints (22) in a plane perpendicular to the axis of the hinge shaft (12, 14, 16).

3. Installation process according to claim 2, in which the actuation of the axial adjustment means consists of placing at least one thickness shim (30) between the collars (32a, 24a) formed on a ring (32) connected to the structure and to a cage (24) of the ball joint (22).

4. Installation process according to either of claims 2 and 3, in which the radial adjustment means are actuated by making a first rotation of an outer cage (36) of the ball joint (22) in a first reaming (33) formed in a ring (32) fixed to the structure, and a second rotation of an inner cage (34) of the ball joint (22) in a second reaming (38) formed in the said outer cage (36) of the ball joint (22), at a location offset from an axis (A1) of the first reaming (33), the said inner cage (34) comprising a spherical inner surface (40) that is offset from the axis (A2) of the second reaming (38) and in which the ball (26) of the ball joint (22) fits.

5. Installation process according to claim 4, in which a ball joint (22) is used in which the second reaming (38) and the spherical inner surface (40) are offset by the same distance e from the axis (A1) of the first reaming (33) and the axis (A2) of the second reaming (38), respectively.

6. Installation process according to any one of claims 2 to 5, in which the radial adjustment means (44, 36) are actuated without disassembling the said ball joint (22).

7. Installation process according to any one of the previous claims, in which the actuation step of the adjustment means (30, 34, 36) is preceded by a step in which marking means (44, 46, 48) are placed on the structure or on a ring attached to the structure and in which the ball joint (22) is installed.

8. Aircraft comprising a landing gear (10) installed according to the process in the previous claims.
